# EUROPEAN PATENT SPECIFICATION

(11) **EP 2 062 685 B1**
(45) Date of publication and mention of the grant of the patent: **26.05.2010**
(21) Application number: 08020033.0
(22) Date of filing: 17.11.2008
(51) Int. Cl.: B23Q 17/20, B23B 25/06

(54) **Machine tool and sensor module**
Maschinenwerkzeug und Sensormodul
Machine-outil et module de capteur

(30) Priority: 22.11.2007 JP 2007302855
(43) Date of publication of application: 27.05.2009
(73) Proprietor: Murata Machinery, Ltd., Minami-ku Kyoto-shi Kyoto 601-8326 (JP)
(72) Inventor: Tanaka, Makoto, Kyoto-shi Kyoto 612-8686 (JP)
(74) Representative: Grünecker, Kinkeldey, Stockmair & Schwanhäusser Anwaltssozietät

(56) References cited:
- EP-A- 1 777 033
- GB-A- 2 141 546
- JP-A- 58 068 608
- JP-A- 63 232 960
- US-A- 5 065 035

## Description

### BACKGROUND OF THE INVENTION

### (1) Field of the Invention

The present invention relates to machine tools and a sensor module, and relates particularly to a machine tool capable of in-machine measurement of workpiece dimensions.

### (2) Description of the Related Art

One of conventionally available machine tools is a turret lathe having a turret that is a rotatable tool-selection mechanism.

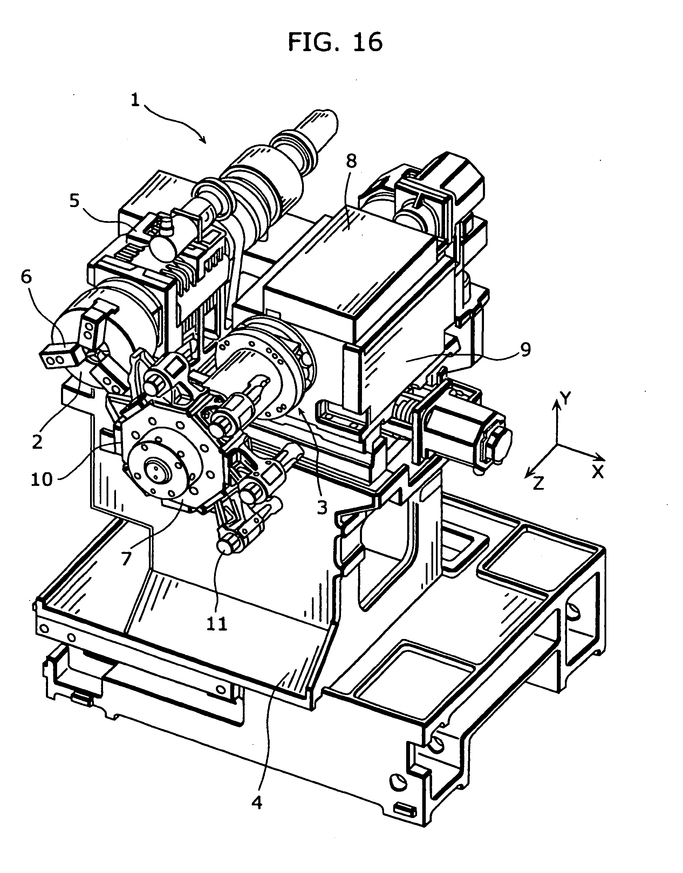

FIG. 16 is an external perspective view of a common turret lathe showing an example of its main portion. A turret lathe 1 shown in FIG. 16 includes a spindle 2 and a turret 3.

The spindle 2 is supported by a headstock 5 provided on a bed 4, and holds a workpiece (not shown) with a spindle chuck 6. The turret 3 includes a turret tool post 7, an indexing mechanism 8, and a turret slide 9.

The turret tool post 7 has tool holding faces 10 around a rotation axis, and is rotatably supported by the indexing mechanism 8. On each of the tool holding faces 10, a tool 11 such as a tool bit is inserted.

The indexing mechanism 8 is provided on the turret slide 9 and, through a motor, rotates the turret tool post 7 to position a desired tool holding face 10 on the workpiece side, and moves the turret tool post 7 along the Z-axis direction, that is, the axial direction of the spindle 2.

The turret slide 9 is provided on the bed 4 to be movable along the X-axis direction orthogonal to the Z-axis direction, and moves along the X-axis direction together with the turret tool post 7 and the indexing mechanism 8 through a motor.

Such a turret lathe is normally placed in a housing (not shown), and the workpiece is machined therein.

Some machine tools such as turret lathes have a function to measure the dimensions of workpieces in the machine tools. This function enables the dimension measurement to be performed without having to take out the workpieces outside the machine tool, for example, and thus the work efficiency improves. Further, by measuring displacement of workpieces and/or displacement of the machine tool caused by changes in the in-machine environment such as a variation in the temperature, and by calibrating a control amount for the machine tool according to the measured displacement, it is possible to ensure highly accurate dimension measurement. Turret lathes having such a function measure the dimensions of workpieces using a sensor mounted on one of the tool holding faces 10, for example.

However, the sensor mounted on the tool holding face 10 is exposed to coolant and chips that scatter at the time of machining workpieces, thereby making the sensor liable to damages, deteriorated reliability, and a shortened lifespan.

In view of such a circumstance, a turret lathe has been proposed which is capable of in-machine measurement of the workpiece dimensions while increasing its lifespan (refer to Patent Reference 1: Japanese Unexamined Utility Model Application Publication No. 07-3902, for example).

The turret lathe disclosed in Patent Reference 1 is provided with: a sensor-holding arm rotatably supported at the front of the turret by a non-rotating member located at the center of the turret, to extend more outwardly than the tools mounted on the turret; an in-machine measurement sensor mounted at the tip of the arm to measure workpieces held at the spindle; a retraction maintaining mechanism that holds the arm at a retraction angle between the spindle and the arm withdrawing from the spindle; and a rotation link mechanism by which the arm is detachably linked with a rotatable portion of the turret.

With this structure, the in-machine measurement sensor can be retracted at appropriate timings irrespective of the turret rotation, and thus be in less contact with accumulated chips and coolant. As a result, the sensor becomes less liable to damages, leading to an increase in the sensor reliability and the lifespan.

However, the conventional technique does not allow size reduction of the turret lathe, because the arm for mounting the sensor is provided separately from the turret tool post. In addition, the arm provided at the front of the turret tool post is liable to hinder tool replacement.

### SUMMARY OF THE INVENTION

The present invention has been conceived in view of such circumstances, and it is an object of the present invention to provide a machine tool capable of in-machine measurement of workpiece dimensions while achieving size reduction of the machine tool and prolonged life of a sensor, and also to provide a sensor module that brings about such advantageous effects for the machine tool. The object of the invention is achieved by a sensor module according to claim 1 and a machine tool comprising a sensor module according to one of claims 1 to 4.

In order to overcome the problems described above, the machine tool of the present invention is a machine tool for machining a workpiece held at a spindle, the machine tool comprising: a turret tool post having tool holding faces; a base mounted on one of the tool holding faces; a movable part mounted on the base to be rotationally or linearly movable so that a distance between the movable part and the one of the tool holding faces on which the base is mounted varies with a rotational or linear movement of the movable part; a sensor mounted on the movable part, the sensor measuring dimensions of the workpiece; and a first cover piece and a second cover piece which open and close with the rotational or linear movement of the movable part with respect to the base, and cover the sensor when closed.

Further, it may be that the first cover piece and second cover piece are supported by the base, and that the machine tool further comprises: a drive mechanism which causes the movable part to reciprocate radially of the turret tool post; a first link which joins the movable part with the first cover piece; and a second link which joins the movable part with the second cover piece.

Further, it may be that the first cover piece and second cover piece are supported by the movable part, and that the machine tool further comprises: a drive mechanism which causes the movable part to rotate with respect to the base; a slide member mounted on the movable part to be movable in a direction parallel to a rotation axis of the movable part; a conversion mechanism which converts the rotational movement of the movable part with respect to the base into a linear movement of the slide member; a first link which joins the slide member with the first cover piece; and a second link which joins the slide member with the second cover piece.

This structure allows the sensor to be protected from chips and coolant by being covered by the cover pieces, prolongs the life of the sensor, as well as providing the following features useful for the size reduction of the machine tool.

Since the movable part, the sensor, and the cover pieces are all mounted on a tool holding face of the turret, in-machine space is not wastefully occupied unlike the conventional structure in which the arm for mounting the sensor is provided separately from the turret tool post. Further, it is unlikely that attachment and detachment of tools to other tool holding faces are hindered. In addition, since the cover pieces open and close circumferentially of the turret tool post, the cover can open and close without significantly departing from the turning radius of tools. Further, the cover pieces open and close through the links and the drive mechanism that reciprocates along the direction in which a support strut extends, thereby achieving a smaller size compared to the case of the structure in which the cover pieces are pulled from outside for opening and closing, for example.

Furthermore, it may be that the machine tool further comprises an elastic body which applies force to the first cover piece and second cover piece towards a closing direction, wherein, with a movement of the movable part, the first link and second link cause the first cover piece and second cover piece to move between an opening position and a closing position, passing through a position at which an angle between the first cover piece and second cover piece is widest.

According to this structure, even when the driving force of the drive mechanism ceases, the cover pieces are stably held in the open and closed states through the force of the elastic body, and thus it is useful for a fail-safe mechanism in the event of untimely blackout, and so on.

The present invention can be embodied not only as such a machine tool, but also as a sensor module used for such a machine tool.

As described above, according to the machine tool of the present invention, since the support strut, sensor and cover pieces are all mounted on a tool holding face of the turret, and the cover pieces can open and close circumferentially of the turret tool post, it is possible to provide a machine tool capable of in-machine measurement of workpiece dimensions while achieving both size reduction of the machine tool and a prolonged life of the sensor, and also to provide a sensor module that brings about such advantageous effects for the machine tool.

### BRIEF DESCRIPTION OF THE DRAWINGS

These and other objects, advantages and features of the invention will become apparent from the following description thereof taken in conjunction with the accompanying drawings that illustrate a specific embodiment of the invention. In the Drawings:
FIG. 1 is an enlarged perspective view showing the external appearance of a sensor module with its cover open according to Embodiment 1 of the present invention;
FIG. 2 is an enlarged perspective view showing the external appearance of a sensor module with its cover closed;
FIG. 3 is a diagram for describing a mechanism for stably holding the covers in the open and closed states;
FIG. 4 is an enlarged perspective view showing the external appearance of a sensor module according to Embodiment 2 of the present invention;
FIG. 5 is an enlarged perspective view showing the external appearance of the sensor module with its arm rotated 90° from the state shown in FIG. 4;
FIG. 6 is an enlarged perspective view showing the external appearance of the sensor module with its arm further rotated 90° from the state shown in FIG. 5;
FIG. 7 is a plan view showing the structure of the sensor module according to Embodiment 2;
FIG. 8 is a perspective view showing the external appearance of a cam;
FIG. 9 is a diagram showing an overview of the inner structure of a gearbox;
FIG. 10 is a schematic diagram showing how a cam moves;
FIG. 11 is a diagram showing the closed states of a first cover piece and a second cover piece;
FIG. 12 is a diagram showing the states of a first cover piece and a second cover piece before they are completely open;
FIG. 13 is a diagram showing the states of a first cover piece and a second cover piece when they are completely open;
FIG. 14 is a diagram showing a flow of sensor module operations when a first cover piece and a second cover piece open;
FIG. 15 is a diagram showing an example of a positional relationship between a sensor module and a workpiece at the time of measuring the workpiece diameter; and
FIG. 16 is an external perspective view showing an example of a common turret lathe.

### DESCRIPTION OF THE PREFERRED EMBODIMENT(S)

### (Embodiment 1)

A turret lathe according to Embodiment 1 of the present invention shall be described in detail with reference to the drawings. The turret lathe of Embodiment 1 is an example of the machine tool of the present invention.

First, the structure of the turret lathe of Embodiment 1 shall be described.

The fundamental structure of the turret lathe of Embodiment 1 is the same as that of the common, conventional turret lathe shown in FIG. 16.

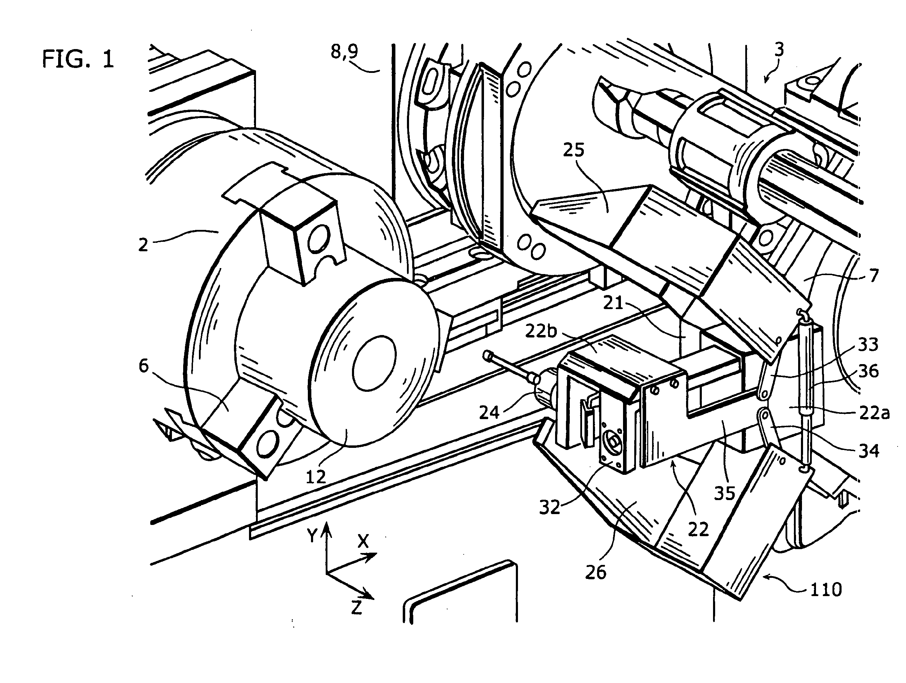

FIG. 1 is an enlarged perspective view of an area near a tool holding face approaching towards a workpiece of the turret lathe according to Embodiment 1, seen from the front left. The structural elements shown in FIG. 16 are given the same reference numerals and their description shall be omitted as appropriate.

The turret lathe shown in FIG. 1 includes a sensor module 110, which is a characteristic, structural element of Embodiment 1, mounted on one of the tool holding faces of the turret tool post 7 provided to the turret 3. The sensor module 110 basically has a sensor, a cover that protects the sensor, and a mechanism for opening and closing the cover.

FIG. 1 shows an example of the sensor module 110 mounted on one of the tool holding faces with the cover open (that is, cover pieces are apart from each other).

The sensor module 110 includes: a base 21 fastened to a tool holding face as a base portion of a support strut; a support strut 22 extending radially of the turret tool post 7 from the base 21; a sensor 24 fixed to the support strut 22 and measuring the dimensions of a workpiece 12; a cover piece 25 serving as a first cover piece; and a cover piece 26 serving as a second cover piece.

The support strut 22 includes a strut leg 22a and a strut head 22b which are separated from each other. The strut leg 22a is provided with a drive mechanism (not shown). The drive mechanism drives a plunger 32 so that it reciprocates radially of the turret tool post 7, that is, along the direction in which the support strut 22 extends. The strut head 22b is mounted on the plunger 32, and reciprocates radially of the turret tool post 7 together with the plunger 32.

The drive mechanism is, for example, an air cylinder that operates by air supplied from a pomp (not shown) via the rotation axis of the turret 3 and the tool holding face. The air supplied for blowing chips and coolant may be used for driving the air cylinder.

The sensor 24 is a contact sensor that detects contact between, for example, the tip of the sensor 24 and a workpiece, and is fixed to the strut head 22b.

The cover pieces 25 and 26 are support stems provided to sandwich the support strut 22 of the base 21, and are openable and closable circumferentially of the turret tool post 7 through the respective axes.

For the mechanism to open and close the cover, the sensor module 110 includes: a bracket 35 fixed to, and moves with, the plunger 32; a link 33 that links the bracket 35 and the cover piece 25; a link 34 that joins the bracket 35 and the cover piece 26; a spring 36 serving as an elastic body that applies force to the cover pieces 25 and 26 towards their closed positions.

In Embodiment 1, the plunger 32, the bracket 35, and the strut head 22b that operate together are an example of the movable part.

The opened cover as shown in FIG. 1 indicates that the plunger 32 is moving towards the turret's outer circumference.

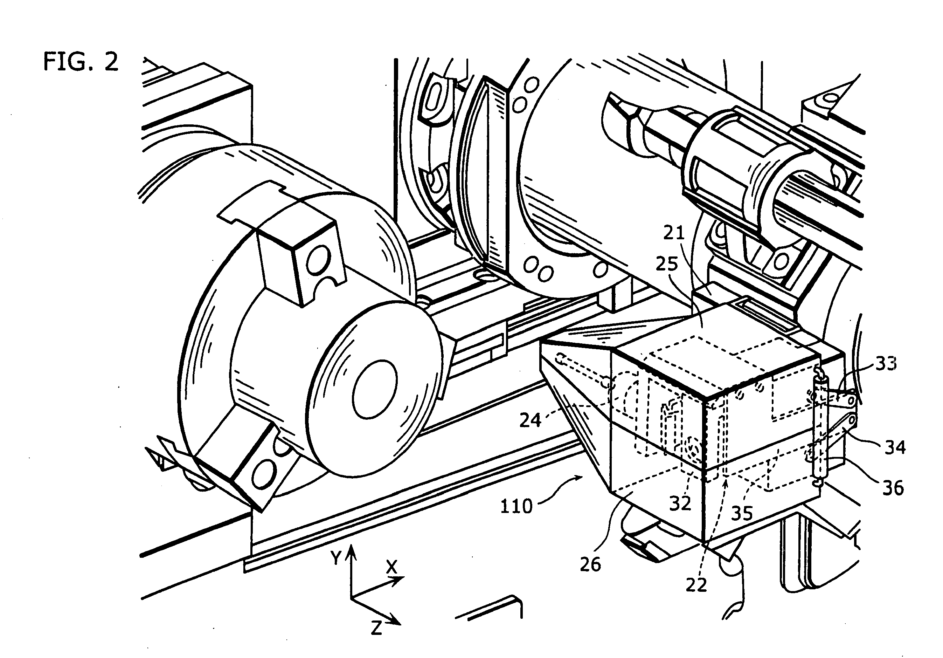

FIG. 2 is an enlarged perspective view showing the external appearance of the sensor module 110 with its cover closed (that is, the cover pieces 25 and 26 are in contact with one another). The closed cover indicates that the plunger 32 is retracted to the turret's inner circumference.

In the closed state, the cover pieces 25 and 26 cover the support strut 22 and the sensor 24, and are within the cutting tools' turning radius, which is the radius within which the cover pieces 25 and 26 do not interfere with other structural elements when the turret tool post 7 rotates.

The cover pieces 25 and 26 move between the open and closed positions with the movement of the plunger 32.

Next, a mechanism for stably holding the covers in the open and closed states shall be described.

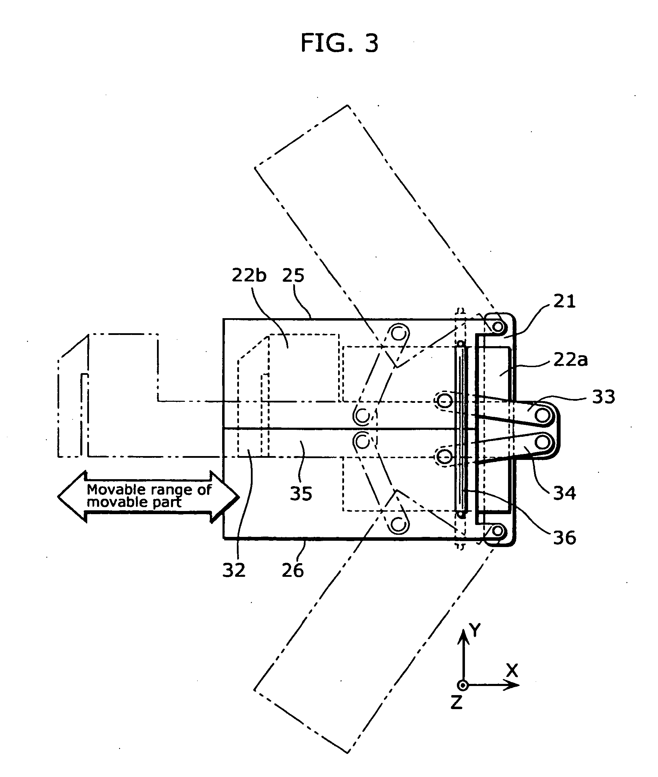

FIG. 3 is a diagram showing the positions of the base 21, the strut leg 22a, the strut head 22b, the cover pieces 25 and 26, the links 33 and 34, the bracket 35, and the spring 36, when the plunger 32 is at one end and the other end of its movable range. The positions of these elements when the plunger 32 is at the one end of its movable range on the turret's inner circumferential side are shown with solid lines and dotted lines, and the positions of these elements when the plunger 32 is at the other end of its movable range on the turret's outer circumferential side are shown with chain double-dashed lines.

Both ends of the movable range of the plunger 32 are at the positions against which the spring 36 pushes the piunger 32 by its force.

When the plunger 32 is at one end of its movable range on the turret's inner circumferential side (right side of the figure), the connection point of the link 33 on the bracket 35 side is at the right of the connection point on the cover piece 25 side, and the connection point of the link 34 on the bracket 35 side is at the right of the connection point on the cover piece 26 side.

At this position, the force of the spring 36 pushes the bracket 35 towards right, pushing the plunger 32 towards the one end of its movable range on the turret's inner circumferential side.

As the plunger 32 moves towards the turret's outer circumference (left side in the figure), the cover pieces 25 and 26 open, widening the open angle. Then, at the position at which the links 33 and 34 become perpendicular to the moving direction of the plunger 32, the open angle between the cover pieces 25 and 26 reaches its peak. After the plunger 32 moves past that position, the cover pieces start to close, narrowing the open angle until the plunger 32 reaches the other end of its movable range on the turret's outer circumferential side.

When the plunger 32 is at the other end of its movable range on the turret's outer circumferential side, the connection point of the link 33 on the bracket 35 side is at the left of the connection point on the cover piece 25 side, and the connection point of the link 34 on the bracket 35 side is at the left of the connection point on the cover piece 26 side.

At this position, the force of the spring 36 pushes the bracket 35 towards left, pushing the plunger 32 towards the other end of its movable range on the turret's outer circumferential side.

According to this structure, even when the driving force of the drive mechanism ceases, the cover is stably held in the open and closed states through the force of the spring 36, and thus it is useful for a fail-safe mechanism in the event of untimely blackout, and so on.

Next, operations of the turret lathe structured as above shall be described.

For the measurement of the workpiece 12, a control device (not shown) of the turret lathe controls the indexing mechanism 8, so that the tool holding face of the turret tool post 7 on which the sensor module 110 is mounted is positioned to face the workpiece 12.

This is followed by supply of air to the drive mechanism of the sensor module 110 to move the plunger 32 towards the other end of its movable range on the turret's outer circumferential side. As a result, the cover opens and the sensor 24 moves towards the workpiece 12 together with the strut head 22b.

The measurement of the workpiece 12 is performed in this state. More specifically, the control device moves the turret slide 9 to the position at which the sensor 24 touches the workpiece 12, and identifies the X coordinate of two points on the diameter of the workpiece 12 for the measurement of the diameter of the workpiece 12.

Through such operations of the turret lathe, the cover pieces 25 and 26 open and close circumferentially of the turret tool post 7 without significantly departing from the turning radius of tools. Thus, no need arises to provide a space for the cover pieces 25 and 26 to be retracted, which is advantageous from the viewpoint of size reduction of the turret lathe.

In addition, the cover pieces 25 and 26 open in a direction away from the workpiece 12, reducing the possibility of interference between the cover pieces 25 and 26 and the workpiece 12. From the viewpoint of avoiding the interference with the workpiece 12, the cover pieces 25 and 26 are desired to be wide open as long as no interference occurs with neighboring tools.

Moreover, the sensor 24 moves towards the workpiece together with the strut head 22b, providing more clearance between the cover pieces 25 and 26 and the sensor 24, which is also favorable for avoiding interference between the cover pieces 25 and 26 and a large workpiece 12.

The measurement of the dimensions of the workpiece 12 is followed by the control device supplying air to the drive mechanism again, to move the plunger 32 towards the one end of its movable range on the turret's inner circumferential side. As a result, the sensor 24, together with the strut head 22b, is retracted towards the turret's inner circumference, and thus the cover closes.

In this state, the support strut 22, the sensor 24, the plunger 32 are covered by the cover pieces 25 and 26, and protected from contact with spattering chips and coolant. In addition, the cover pieces 25 and 26 are within the turning radius of tools, and thus do not interfere with other structural elements even when the turret tool post 7 rotates.

With such protection provided, the control device rotates the turret tool post 7 to position a desired tool towards the workpiece 12 for continued machining.

It is to be noted that in Embodiment 1, the elastic body that applies force to the cover pieces 25 and 26 towards their closed positions is not limited to the spring 36. For example, the elastic body may be a torsion spring connecting the cover piece 25 with the base 21, and the cover piece 26 with the base 21.

Furthermore, the support stems of cover pieces 25 and 26 may be arranged to be nonparallel; narrowing towards the front of the turret (the normal direction of the Z-axis). With such arrangement, the end parts of the cover pieces 25 and 26 move towards the front of the turret while opening, and thus they can be away from the workpiece 12. Such a structure is favorable for avoiding the interference between the cover pieces 25 and 26 and a large workpiece 12.

As described, according to the structures of the machine tool and the sensor module of Embodiment 1, the cover pieces 25 and 26 open and close circumferentially of the turret tool post 7, and are thus capable of opening and closing without significantly departing from the turning radius of tools. In addition, since the cover pieces 25 and 26 open and close through the link mechanism and the drive mechanism that reciprocates radially of the turret tool post 7, it is possible to achieve a smaller size compared to the case of the structure in which the cover pieces are pulled from outside for opening and closing, for example.

### (Embodiment 2)

In Embodiment 2 of the present invention, a turret lathe which includes a sensor module 120 shall be described. The sensor module 120 is capable of extending and shortening a sensor distance, that is, the distance between the sensor 24 and the tool holding face 10, through rotation of an arm 122 having the sensor 24 on its end. The turret lathe of Embodiment 2 is another example of the machine tool of the present invention.

It is to be noted that the fundamental structure of the turret lathe according to Embodiment 2 is the same as that of Embodiment 1. Thus, the following description shall center on the sensor module 120, which is a characteristic, structural element of Embodiment 2.

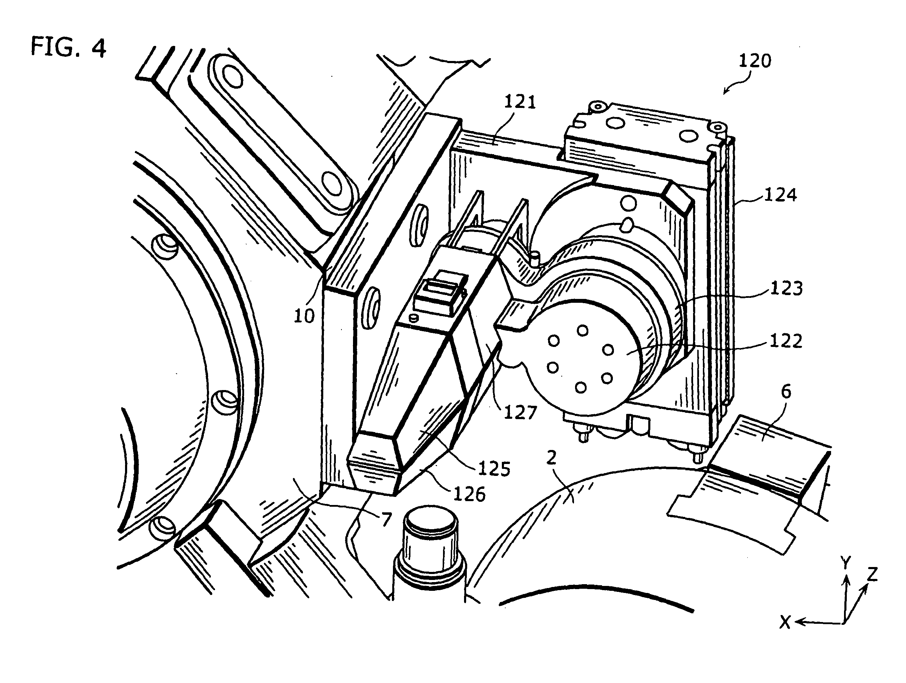

First, with reference to FIGS. 4 to 7, the fundamental structure of the sensor module 120 according to Embodiment 2 shall be described.

FIG. 4 is an enlarged perspective view showing the external appearance of the sensor module 120 according to Embodiment 2 of the present invention.

The sensor module 120 includes: a base 121; the arm 122 that is rotatably mounted on the base 121; a gearbox 123 that rotates together with the arm 122; a driving unit 124 that drives the arm 122 to rotate; a first cover piece 125 and a second cover piece 126 that cover the sensor 24 (not shown in FIG. 4); and a rear cover 127 fixed to the tip of the arm 122.

In Embodiment 2, the tip of the arm 122 and the rear cover 127 that operate together are an example of the movable part.

FIG. 4 shows the sensor module 120 with the sensor distance shortened by the arm 122 accommodated inward. From this state, the driving unit 124 can make the arm 122 rotate 180°.

The rotation of the arm 122 results in an extension of the distance between the sensor 24 held at the tip of the arm 122 and the tool holding face 10.

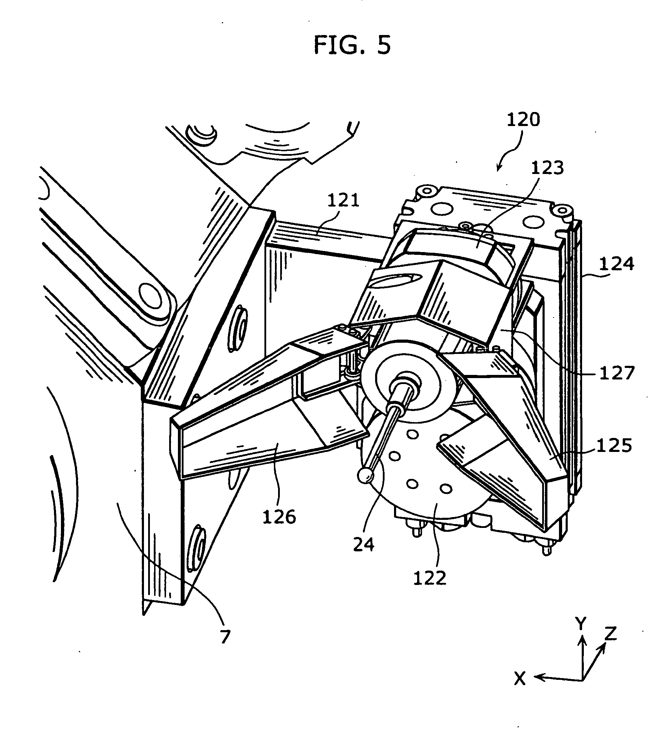

FIG. 5 is an enlarged perspective view showing the external appearance of the sensor module 120 with the arm 122 rotated 90° from the state shown in FIG. 4.

As FIG. 5 shows, with the rotation of the arm 122, the first cover piece 125 and the second cover piece 126 open.

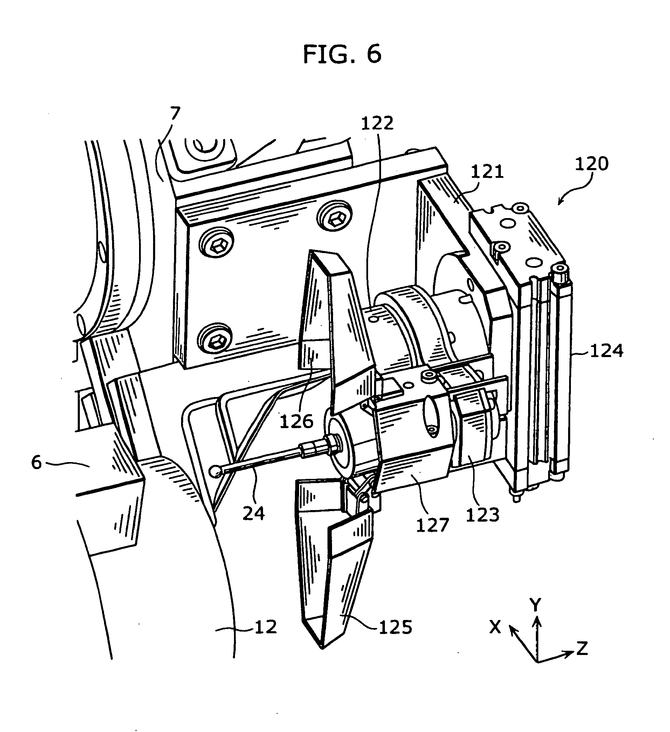

FIG. 6 is an enlarged perspective view showing the external appearance of the sensor module 120 with the arm 122 further rotated 90° from the state shown in FIG. 5.

Further, as FIG. 6 shows, when the arm 122 rotated 180° from the state shown in FIG. 4, the sensor distance is extended, and the first cover piece 125 and the second cover piece 126 completely open.

As described, the sensor module 120 is capable of rotating the arm 122 to bring the sensor 24 to a position, in the radial direction of the turret tool post 7, away from the tool holding face 10. In other words, the sensor module 120 is capable of extending the sensor distance.

The extension of the sensor distance enables direct measurement of both ends of the workpiece diameter using the sensor 24.

It is to be noted that the driving unit 124 is structured with an air cylinder and a rack and pinion, for example, and is capable of rotating the arm 122 using the air cylinder serving as a driving source.

Further, when an air cylinder is used for the driving unit 124, the air supplied to the turret tool post 7 for blowing chips, for example, can be used, as described in Embodiment 1.

The arm 122 together with the driving unit 124 realizes a distance adjustment mechanism as the drive mechanism of the machine tool and sensor module of the present invention.

When the arm 122 rotates 180° in the opposite direction from the state shown in FIG. 6, the sensor distance is shortened, and the first cover piece 125 and the second cover piece 126 close as shown in FIG. 4.

In the present embodiment, such opening and closing operation of the first cover piece 125 and the second cover piece 126 is achieved through the gearbox 123 and a link mechanism. Detailed description of the link mechanism shall be provided later.

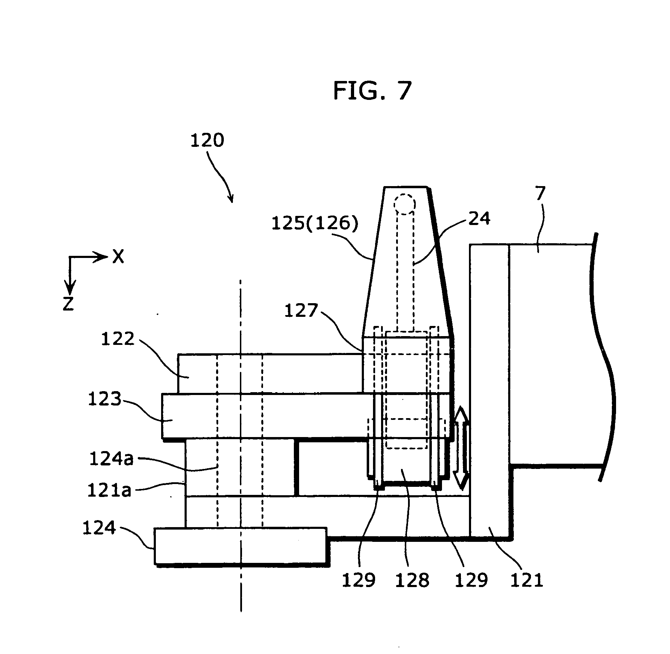

Next, with reference to FIGS. 7 to 13, the structure and operations of the sensor module 120 according to Embodiment 2 shall be described.

FIG. 7 is a plan view showing the structure of the sensor module 120 according to Embodiment 2.

As FIG. 7 shows, the sensor module 120 includes a cam 128 and slide members 129 as well as the above described structural elements such as the arm 122.

The driving unit 124 includes a drive shaft 124a parallel to the rotation axis of the turret tool post 7, that is, parallel to the Z-axis.

The arm 122 is joined to the drive shaft 124a, and the driving unit 124 is capable of rotating the arm 122 through the drive shaft 124a.

The gearbox 123 mounted to the arm 122 rotates together with the arm 122. With this rotation, gears in the gearbox 123 rotate, causing the cam 128 to move along the direction parallel to the Z-axis direction.

Such movement of the cam 128 causes the slide members 129, which are joined to the cam 128, to move along the same direction.

It is to be noted that the slide members 129 can slide with respect to the arm 122 and the gearbox 123 along the direction parallel to the Z-axis direction. Therefore, the cam 128 joined to the slide members 129 does not rotate with respect to the arm 122 and the gearbox 123.

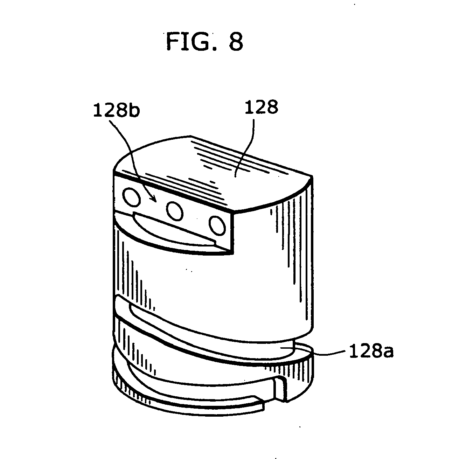

FIG. 8 is a perspective view showing the external appearance of the cam 128.

The cam 128 includes: a cam groove 128a with which a protrusion on the inner circumference of a gear in the gearbox 123 engages and along which the protrusion slides; and a slide member attachment portion 128b at which the slide members 129 are attached.

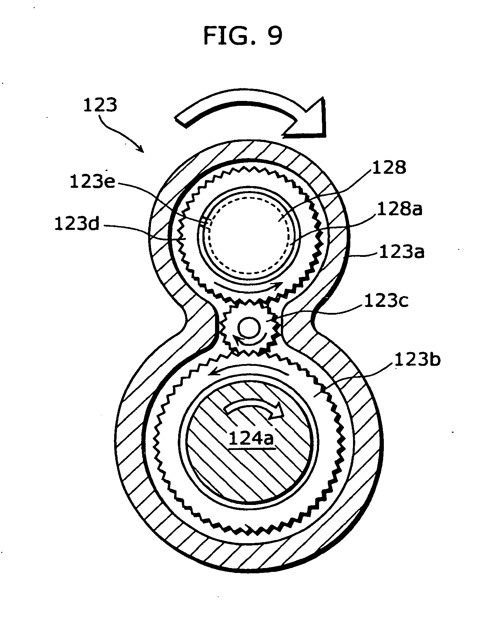

FIG. 9 is a diagram showing an overview of the inner structure of the gearbox 123.

As FIG. 9 shows, the gearbox 123 includes a gearcase 123a, a first gear 123b, a second gear 123c, and a third gear 123d.

Out of the three gears, only the first gear 123b does not rotate with respect to the base 121. More specifically, the first gear 123b is fixed to a cylinder 121a (refer to FIG. 7) of the base 121.

Therefore, when the gearbox 123 rotates around the drive shaft 124a, the first gear 123b rotates relative to the gearcase 123a.

Further, a protrusion 123e is formed on the inner circumference of the third gear 123d, and the protrusion engages with the cam groove 128a of the cam 128 inserted in a hole formed inward of the third gear 123d. The direction of the cam groove 128a is slant with respect to the rotating face of the third gear 123d.

In this structure, when the third gear 123d rotates, the cam 128 that does not rotate with respect to the gearbox 123 moves along the direction parallel to the Z-axis, that is, the direction towards the rear or the front of FIG. 9.

For example, when the drive shaft 124a rotates clockwise as shown in FIG. 9, the gearbox 123 also rotates in the same direction.

At this time, the first gear 123b fixed to the base 121 rotates counterclockwise with respect to the gearcase 123a.

The rotating force of the first gear 123b is transmitted to the third gear 123d through the second gear 123c, causing the third gear 123d to rotate counterclockwise. As a result, the cam 128 moves along the direction parallel to the Z-axis.

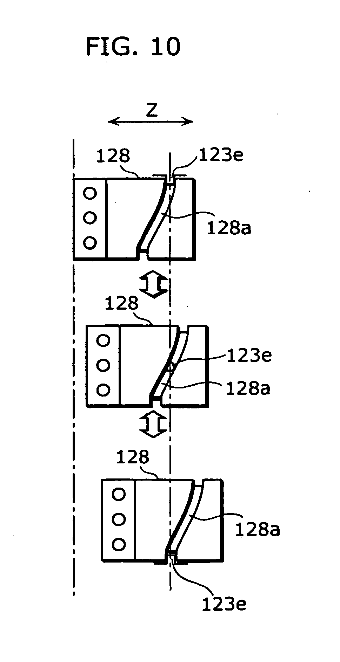

FIG. 10 is a schematic diagram showing how the cam 128 moves.

As FIG. 10 shows, the protrusion 123e moves along the direction perpendicular to the Z-axis while tracing the cam groove 128a. As a result, the cam 128 moves along the direction parallel to the Z-axis.

For example, when the left side of FIG. 10 is assumed to be the rear of FIG. 9, the clockwise rotation of the gearbox 123 causes the third gear 123d to rotate counterclockwise. As a result, the cam 128 moves towards the front side of FIG. 9 (right in FIG. 10).

On the other hand, the counterclockwise rotation of the gearbox 123 causes the cam 128 to move towards the rear of FIG. 9 (left in FIG. 10).

With such movement of the cam 128, the slide members 129 move, causing the first cover piece 125 and the second cover piece 126 to open and close through the link mechanism.

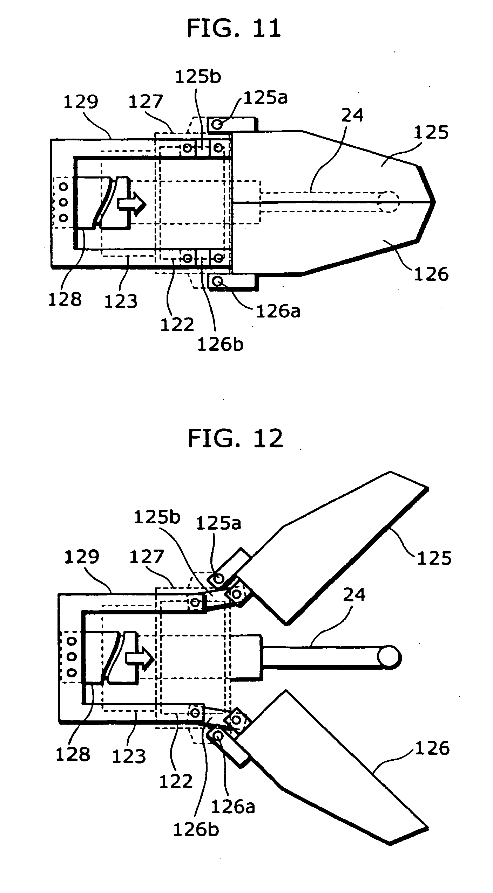

FIG. 11 is a diagram showing the closed states of the first cover piece 125 and the second cover piece 126.

As FIG. 11 shows, the first cover piece 125 is rotatably joined with the rear cover 127 through a first pin 125a, and rotates around the first pin 125a that serves as a rotation axis.

Further, the second cover piece 126 is rotatably joined with the rear cover 127 through a second pin 126a, and rotates around the second pin 126a that serves as a rotation axis.

The first cover piece 125 is linked with the slide members 129 through a first link 125b, and the second cover piece 126 is joined with the slide members 129 through a second link 126b.

When the cam 128 moves from the state shown in FIG. 11 towards the sensor 24, that is, towards the right side of FIG. 11, the slide members 129 also move to the right.

The right movement of the slide members 129 causes the first cover piece 125 to rotate upward of FIG. 11 through the first link 125b. Further, the second cover piece 126 is caused to rotate downward through the second link 126b. In other words, the first cover piece 125 and the second cover piece 126 rotate in order to open.

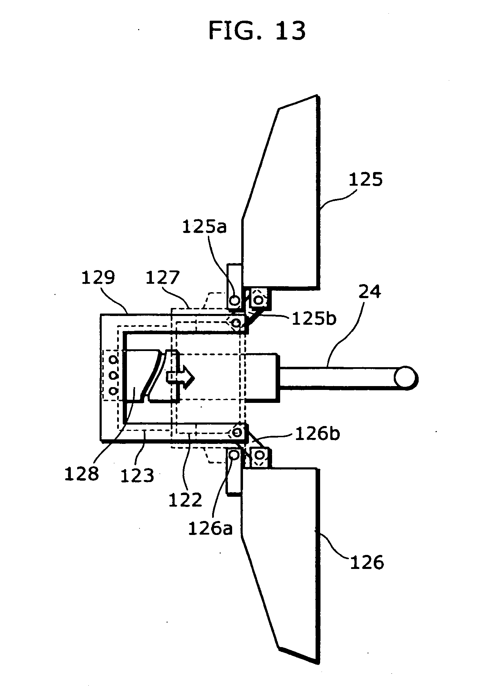

As described, with the right movement of the cam 128, the first cover piece 125 and the second cover piece 126 gradually open to reach their states shown in FIG. 13 through the states shown in FIG. 12.

FIG. 12 is a diagram showing the states of the first cover piece 125 and the second cover piece 126 before they are completely open, and FIG. 13 shows their states when they are completely open.

As FIG. 13 shows, since both the first cover piece 125 and the second cover piece 126 rotate only 90° approximately, these cover pieces do not hinder the measurement of workpiece dimensions by the sensor 24.

In addition, even when dust such as chips exists in the cover pieces, it can be removed to the outside of the cover pieces. In other words, it is possible to prevent dust accumulation inside the cover pieces.

It is to be noted that a left movement of the cam 128 from the state shown in FIG. 13 causes the first cover piece 125 and the second cover piece 126 to return to their states shown in FIG. 11.

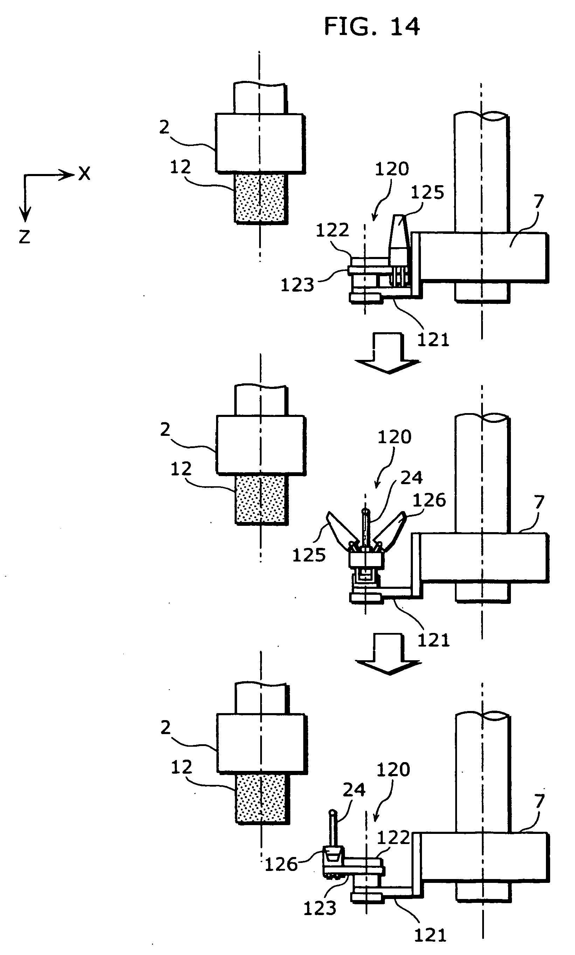

FIG. 14 is a diagram showing a flow of operations of the sensor module 120 performed when the first cover piece 125 and the second cover piece 126 are opening.

It is to be noted that the top part of FIG. 14 corresponds to FIG. 11, the middle part to FIG. 12, and the bottom part to FIG. 13.

The top part of FIG. 14 shows the state where the sensor distance is the shortest. The 90° rotation of the arm 122 from this state leads to the state shown in the middle part of FIG. 14. The further 90° rotation of the arm 122 leads to the state shown in the bottom part of FIG. 14.

As described, the rotation of the arm 122 causes the slide members 129 to move, which in turn causes the first cover piece 125 and the second cover piece 126 to gradually open through the first link 125b and the second link 126b which are joined to the slide members 129.

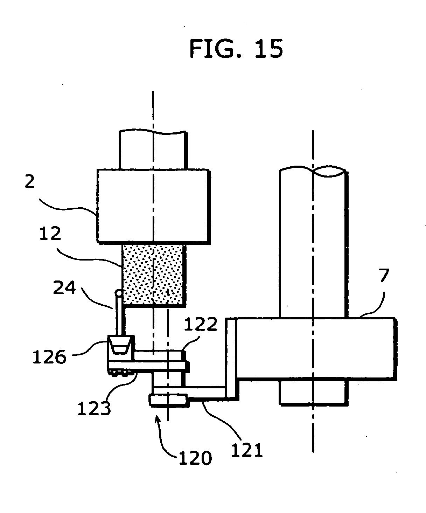

As shown in the bottom part of FIG. 14, when the sensor distance is extended, the arm 122 stops rotating to allow the measurement of the dimensions of the workpiece 12, as shown in FIG. 15, to start.

Then, when the measurement of the dimensions of the workpiece 12 finishes, the arm 122 rotates in the opposite direction, shortening the sensor distance, and causing the first cover piece 125 and the second cover piece 126 to return to their closed states, as shown in the top part of FIG. 14.

It is to be noted that as with the extension and retraction of the support strut 22, for example, of Embodiment 1, the rotation of the arm 122 and the movement of the turret tool post 7 are controlled by a control device which is not shown.

In the present embodiment, the drive shaft 124a serving as the rotation axis of the arm 122 of the sensor module 120 is parallel to the rotation axis of the turret tool post 7. However, the drive shaft 124a may be oriented to a different direction.

That is to say, the drive shaft 124a may be oriented to any direction as long as the rotation of the arm 122 does not hinder the rotation of the turret tool post 7 but allows the extension and shortening of the sensor distance to enable the direct measurement of the diameter of a target workpiece.

As described, according to the turret lathe, which is an example of the machine tool of the present invention, the sensor 24 is covered by the cover pieces to be protected from chips and coolant and to achieve a prolonged life of the sensor 24, and there are also many features useful for size reduction of the turret lathe as follows.

Since the sensor 24, cover pieces and mechanism for opening and closing the cover pieces are all mounted on the base fastened to a tool holding face of the turret, in-machine space is not wastefully occupied unlike the conventional structure in which the arm for mounting the sensor is provided separately from the turret tool post. Further, it is unlikely that attachment and detachment of tools to other tool holding faces are hindered.

In addition, the structure of the portion upper than the base can be designed independently of the turret 3 as a sensor module mounted on a tool holding face, and no complex mechanism such as the conventional arm is provided to the turret 3. This enables rational design development for turret lathes, and also allows improvement of turret lathe reliability.

Although a turret lathe has been described above as an example of the machine tool according to the present invention based on some embodiments, the present invention is not limited to these embodiments. Those skilled in the art will readily appreciate that many modifications are possible in the exemplary embodiments without materially departing from the novel teachings and advantages of this invention. Accordingly, all such modifications are intended to be included within the scope of this invention.

For example, the drive mechanism may be achieved using an oil cylinder, an electromagnetic solenoid, or an electric motor, instead of using the air cylinder.

Further, workpiece dimensions other than diameters may be measured using the sensor module 120. For example, the bore diameter, that is, the diameter of a hole made by boring, may be measured.

Further, the sensor 24 may be other than a touch sensor; it may be a sensor that optically measures the shape, position, and so on of workpieces. Furthermore, it may be a sensor that measures a property value such as a temperature, instead of dimensions.

Moreover, examples of the machine tool having a turret serving as a rotatable tool-selection mechanism include machining centers and so on, as well as turret lathes.

### INDUSTRIAL APPLICABILITY

The machine tool according to the present invention can be widely used as a machine tool, such as a turret lathe and a machining center, having a turret serving as a tool-selection mechanism.

## Claims

1. A sensor module for use in a machine tool comprising tool holding faces (10) provided around a rotation axis of a turret tool post (7), said sensor module comprising:
a base (21, 121) mounted on the one of the tool holding faces (10);
a movable part (22, 122) mounted on said base to be rotationally or linearly movable so that a distance between said movable part (22, 122) and the one of the tool holding faces (10) on which said base (21, 121) is mounted varies with a rotational or linear movement of said movable part (22, 122);
a sensor (24) mounted on said movable part (22, 122), said sensor (24) measuring dimensions of a workpiece (12); and
a first cover piece (25) and a second cover piece (26) which open and close with the rotational or linear movement of said movable part (22, 122) with respect to said base (21, 121), and cover said sensor (24) when closed.

2. The sensor module according to claim 1,
wherein said first cover piece (25) and second cover piece (26) are supported by said base (21, 121), and
said sensor module further comprises:
a drive mechanism which causes said movable part (22, 122) to reciprocate radially of the turret tool post (7);
a first link (33) which joins said movable part (22, 122) with said first cover piece (25); and
a second link (34) which joins said movable part (22, 122) with said second cover piece (26).

3. The sensor module according to claim 2, further comprising:
an elastic body (36) which applies force to said first cover piece (25) and second cover piece (26) towards a closing direction,
wherein, with a movement of said movable part (22, 122), said first link (33) and second link (34) causes said first cover piece (25) and second cover piece (26) to move between a closing position and an opening position, passing through a position at which an angle between said first cover piece (25) and second cover piece (26) is widest.

4. The sensor module according to claim 1,
wherein said first cover piece (25) and second cover piece (26) are supported by said movable part (22, 122), and
said sensor module further comprises:
a drive mechanism which causes said movable part (22, 122) to rotate with respect to said base (21, 121);
a slide member (129) mounted on said movable part (22, 122) to be movable in a direction parallel to a rotation axis of said movable part (22, 122);
a conversion mechanism which converts the rotational movement of said movable part (22, 122) with respect to said base (21, 121) into a linear movement of said slide member (129);
a first link (125b) which joins said slide member with said first cover piece; and
a second link (126b) which joins said slide member with said second cover piece.

5. A machine tool which includes a turret tool post (7) having tool holding faces (10) for machining a workpiece (12) held at a spindle (2), **characterized in that**, said machine tool further comprises a sensor module according to one of claims 1 to 4 mounted on one of said tool holding faces (10).

## Patentansprüche

1. Sensormodul zum Einsatz in einer Werkzeugmaschine, das Werkzeug-Halteflächen (10) umfasst, die um eine Drehachse eines Revolverkopfs (7) herum vorhanden sind,
wobei das Sensormodul umfasst:
einen Träger (21, 121), der an einer der Werkzeug-Halteflächen (10) angebracht ist;
einen beweglichen Teil (22, 122), der an dem Träger so angebracht ist, dass er drehend oder linear so bewegt werden kann, dass sich ein Abstand zwischen dem beweglichen Teil (3) und der einen der Werkzeug-Halteflächen (10), an der der Träger (21, 121) angebracht ist, mit einer drehenden oder linearen Bewegung des beweglichen Teils (22, 122) ändert;
einen Sensor (24), der an dem beweglichen Teil (22, 122) angebracht ist, wobei der Sensor (24) Abmessungen eines Werkstücks (12) misst; und
ein erstes Abdeckteil (25) sowie ein zweites Abdeckteil (26), die sich mit der drehenden oder linearen Bewegung des beweglichen Teils (22, 122) in Bezug auf den Träger (21, 121) öffnen und schließen und den Sensor (24) abdecken, wenn sie geschlossen sind.

2. Sensormodul nach Anspruch 1,
wobei das erste Abdeckteil (25) und das zweite Abdeckteil (26) von dem Träger (21, 121) getragen werden, und
das Sensormodul des Weiteren umfasst:
einen Antriebsmechanismus, der bewirkt, dass sich der bewegliche Teil (22, 122) radial zu dem Revolverkopf (7) hin und her bewegt;
ein erstes Verbindungsglied (33), das den beweglichen Teil (22, 122) mit dem ersten Abdeckteil (25) verbindet; und
ein zweites Verbindungsglied (34), das den beweglichen Teil (22, 122) mit dem zweiten Abdeckteil (26) verbindet.

3. Sensormodul nach Anspruch 12, das des Weiteren umfasst:
einen elastischen Körper (36), der Kraft auf das erste Abdeckteil (25) und das zweite Abdeckteil (26) in einer Schließrichtung ausübt,
wobei bei einer Bewegung des beweglichen Teils (22, 122) das erste Verbindungsglied (33) und das zweite Verbindungsglied (34) bewirken, dass sich das erste Abdeckteil (25) und das zweite Abdeckteil (26) zwischen einer Schließposition und einer Öffnungsposition bewegen und dabei eine Position durchlaufen, an der ein Winkel zwischen dem ersten Abdeckteil (25) und dem zweiten Abdeckteil (26) am größten ist.

4. Sensormodul nach Anspruch 1,
wobei das erste Abdeckteil (25) und das zweite Abdeckteil (26) von dem beweglichen Teil (22, 122) getragen werden, und
das Sensormodul des Weiteren umfasst:
einen Antriebsmechanismus, der bewirkt, dass sich der bewegliche Teil (22, 122) in Bezug auf den Träger (21, 121) dreht;
ein Gleitelement (129), das an dem beweglichen Teil (22, 122) so angebracht ist, dass es in einer Richtung parallel zu einer Drehachse des beweglichen Teils (22, 122) bewegt werden kann;
einen Umwandlungsmechanismus, der die drehende Bewegung des beweglichen Teils (22, 122) in Bezug auf den Träger (21, 121) in eine lineare Bewegung des Gleitelementes (129) umwandelt;
ein erstes Verbindungsglied (125b), das das Gleitelement mit dem ersten Abdeckteil verbindet; und
ein zweites Verbindungsglied (126b), das das Gleitelement mit dem zweiten Abdeckteil verbindet.

5. Werkzeugmaschine, die einen Revolverkopf (7) enthält, der Werkzeughalteflächen (10) zum Bearbeiten eines an einer Spindel (2) gehaltenen Werkstücks (12) hat, **dadurch gekennzeichnet, dass** die Werkzeugmaschine des Weiteren ein Sensormodul nach einem der Ansprüche 1 bis 4 umfasst, das an einer der Werkzeug-Halteflächen (10) angebracht ist.

## Revendications

1. Module de capteur destiné à une machine-outil comprenant des faces de fixation d'outil (10) disposées autour d'un axe de rotation d'une tourelle revolver (7), le module de capteur comprenant :
une base (21, 121) montée sur l'une des faces de fixation d'outil (10) ;
une partie mobile (22, 122) montée sur ladite base pour être mobile en rotation ou linéairement de sorte qu'une distance entre la partie mobile (22, 122) et la face de fixation d'outil (10) sur laquelle la base (21, 121) est montée (21, 121) varie avec un mouvement rotatif ou linéaire de la partie mobile (22, 122) ;
un capteur (24) monté sur la partie mobile (22, 122), le capteur (24) mesurant les dimensions d'une pièce à usiner (12) ; et
une première pièce de recouvrement (25) et une seconde pièce de recouvrement (26) qui s'ouvrent et se ferment avec le mouvement rotatif ou linéaire de la partie mobile (22, 122) par rapport à la base (21, 121) et qui couvrent le capteur (24) quand elles sont fermées.

2. Module de capteur selon la revendication 1, dans lequel la première pièce de recouvrement (25) et la seconde pièce de recouvrement (26) sont supportées par la base (21, 121), et
le module de capteur comprend également :
un mécanisme d'entraînement qui soumet la partie mobile (22, 122) à un mouvement de va-et-vient radialement par rapport à la tourelle (7) ;
un premier élément de liaison (33) qui relie la partie mobile (22, 122) à la première pièce de recouvrement (25) ;
et un second élément de liaison (34) qui relie la partie mobile (22, 122) à la seconde pièce de recouvrement (26).

3. Module de capteur selon la revendication 2, comprenant également :
un corps élastique (36) qui applique une force à la première pièce de recouvrement (25) et à la seconde pièce de recouvrement (26) vers un sens de fermeture,
étant précisé qu'avec un mouvement de la partie mobile (22, 122), le premier élément de liaison (33) et le second élément de liaison (34) provoquent un mouvement de la première pièce de recouvrement (25) et de la seconde pièce de recouvrement (26) entre une position de fermeture et une position d'ouverture, en passant par une position où un angle entre la première pièce de recouvrement (25) et la seconde pièce de recouvrement (26) est le plus large.

4. Module de capteur selon la revendication 1, dans lequel la première pièce de recouvrement (25) et la seconde pièce de recouvrement (26) sont supportées par la partie mobile (22, 122), et
le module de capteur comprend également :
un mécanisme d'entraînement qui fait tourner la partie mobile (22, 122) par rapport à la base (21, 121) ;
un élément coulissant (129) monté sur la partie mobile (22, 122) pour être mobile dans un sens parallèle à un axe de rotation de ladite partie mobile (22, 122) ;
un mécanisme de conversion qui convertit le mouvement rotatif de la partie mobile (22, 122) par rapport à la base (21, 121) en mouvement linéaire de l'élément coulissant (129) ;
un premier élément de liaison (125b) qui relie l'élément coulissant à la première pièce de recouvrement ;
et un second élément de liaison (126b) qui relie l'élément coulissant à la seconde pièce de recouvrement.

5. Machine-outil qui comprend une tourelle revolver (7) présentant des faces de fixation d'outil (10) pour l'usinage d'une pièce (12) fixée sur une broche (2), **caractérisée en ce que** la machine-outil comprend un module de capteur selon l'une des revendications 1 à 4 monté sur l'une des faces de fixation d'outil (10).
